Europäisches Patentamt

(19) European Patent Office

Office européen des brevets

(11) Numéro de publication : **0 006 805**
**B1**

(12) **FASCICULE DE BREVET EUROPÉEN**

(45) Date de publication du fascicule du brevet :
07.04.82

(51) Int. Cl.³ : **B 01 J  8/00**, B 05 B  3/02,
B 05 B  7/14// B65G65/32

(21) Numéro de dépôt : 79400407.7

(22) Date de dépôt : 19.06.79

(54) Appareil de distribution de particules solides.

(30) Priorité : 19.06.78 FR 7818291

(43) Date de publication de la demande :
09.01.80 (Bulletin 80/01)

(45) Mention de la délivrance du brevet :
07.04.82 Bulletin 82/14

(84) Etats contractants désignés :
AT BE CH DE FR GB IT LU NL SE

(56) Documents cités :
FR - A - 1 218 230
FR - A - 2 189 298
FR - A - 2 259 641
FR - A - 2 266 552
US - A - 3 995 753
US - A - 4 039 431
GB - A - 1 340 345

(73) Titulaire : **SAINT-GOBAIN INDUSTRIES**
**62, Bd Victor Hugo**
**F-92209 Neuilly sur Seine (FR)**

(72) Inventeur : **Meunier, Georges**
**"La Teyssonnière" Grande Rue**
**F-71150 Fontaines par Chagny (FR)**

(74) Mandataire : **Eudes, Marcel et al**
**Saint-Gobain Recherche 39 Quai Lucien Lefranc**
**F-93304 Aubervilliers Cedex (FR)**

Imprimerie Jouve, 18, rue St-Denis, 75001 Paris, France

## Appareil de distribution de particules solides

La présente invention concerne un dispositif pour la distribution de particules solides, notamment à l'intérieur d'une enceinte parcourue par un courant gazeux.

Elle vise plus particulièrement à permettre la maîtrise de la répartition des particules, et à garantir l'étanchéité atmosphérique de l'enceinte.

On connaît déjà divers appareils ayant pour objet la distribution de particules solides, notamment de types rotatif ou vibrant, mais ils ne répondent pas de manière satisfaisante aux buts que se propose l'invention.

Par exemple, le brevet GB-A-1.340.345, publié le 12 décembre 1973, décrit un appareil visant à répartir au sein d'un lit fluidisé des matériaux fluides, tels que des gaz ou des liquides, ou même des matériaux pulvérulents fluidifiés.

Cet appareil comprend un organe d'alimentation constitué d'un arbre rotatif vertical comportant au moins un conduit interne longitudinal raccordé en partie basse à un conduit d'amenée fixe, pour le matériau fluide, et débouchant en partie haute sur une tête de répartition alimentant des bras de distribution.

Un tel dispositif, relativement peu fiable, en particulier aux températures élevées, du fait de sa complexité mécanique, s'avère, de plus, mal adapté au but visé par l'invention, en ce qu'il implique, pour le transport pneumatique des particules solides, la mise en œuvre d'un fluide porteur, à des débits tels que son introduction dans l'enceinte, en même temps que les particules solides, perturbe fortement le courant gazeux qui traverse ladite enceinte.

Le brevet FR-A-2.226.552, publié le 31 octobre 1975, décrit également un appareil de distribution de particules solides de type rotatif.

Ce dispositif comprend un organe fixe d'alimentation délivrant un flux principal de particules solides et, disposés à sa partie inférieure, un bac à grille de fluidisation adaptée auxdites particules, bac dont une paroi circulaire est munie d'orifices, situés à un même niveau et régulièrement répartis, formant déversoirs délivrant des flux secondaires de particules, et un organe rotatif de distribution recevant et dispersant les flux secondaires de particules provenant desdits déversoirs, constitué d'un plateau circulaire rotatif coaxial à ladite paroi, portant des ailettes radiales de guidage des particules.

Dans le dispositif revendiqué, le bac à lit fluidisé est fixe et son alimentation radiale, aussi bien pour le gaz de fluidisation que pour les particules solides, ce qui rend peu fiables la régularité de la répartition entre les différents déversoirs, et par conséquent la régularité de la distribution par le plateau circulaire rotatif. En outre, ce dispositif ne se prête guère qu'à une distribution mono-annulaire, entraînant généralement une importante ségrégation granulométrique. Enfin, tel que décrit, l'appareil ne permet pas d'assurer l'étanchéité atmosphérique de l'enceinte dans laquelle les particules solides sont à introduire.

La présente invention permet de remédier à ces inconvénients en proposant un dispositif simple, d'un fonctionnement mécanique très fiable, même à température élevée, qui assure une bonne maîtrise de la distribution des particules solides sans que soit perturbé le courant gazeux parcourant l'enceinte dans laquelle lesdites particules sont introduites.

Le dispositif de distribution de particules solides conforme à l'invention — du type comprenant un organe fixe d'alimentation délivrant un flux principal de particules solides et, disposés à sa partie inférieure, un bac à grille de fluidisation adaptée aux particules, bac dont une paroi circulaire est munie d'orifices situés à un même niveau et régulièrement répartis formant déversoirs, délivrant des flux secondaires de particules solides, et un organe rotatif de distribution recevant et dispersant lesdits flux secondaires provenant desdits déversoirs — se distingue des dispositifs connus en ce que le bac à grille de fluidisation et l'organe de distribution sont rigidement liés, de sorte qu'ils forment un seul et même ensemble rotatif.

Selon une autre caractéristique de l'invention, ledit ensemble rotatif est entraîné en rotation à l'aide d'un arbre axial creux, muni d'orifices situés à l'intérieur dudit bac, au-dessous de la grille de fluidisation, permettant d'alimenter ledit bac en gaz de fluidisation.

De manière préférentielle, ledit ensemble rotatif est disposé à la partie inférieure de son arbre creux d'entraînement ; étant ainsi suspendu à celui-ci, les paliers de l'arbre, de même que le moteur, peuvent être situés hors de l'enceinte qui peut donc être le siège de températures élevées, sans risques pour l'appareil.

Dans une forme avantageuse de réalisation, le dispositif de l'invention comporte, pour distribuer les flux secondaires de particules solides s'échappant par trop-plein des orifices, formant déversoirs, ménagés dans la paroi circulaire dudit bac, des conduits radiaux raccordés auxdits déversoirs. Ceux-ci peuvent être des gouttières, ou de préférence des tubes lorsque l'enceinte à alimenter en particules solides est parcourue par un courant gazeux.

Dans cette éventualité, une bonne étanchéité de l'enceinte est généralement souhaitée, et il est avantageux que, selon une autre caractéristique du dispositif de l'invention, l'organe d'alimentation en particules solides comporte un conduit débouchant, au-dessus de la grille de fluidisation, à un niveau inférieur à celui des orifices déversoirs. On réalise ainsi, lors du fonctionnement du lit fluidisé, un siphon de type hydraulique qui assure la non-communication de l'atmosphère de l'enceinte avec l'atmosphère extérieure.

En outre, le conduit tubulaire de l'organe fixe d'alimentation en particules est avantageusement concentrique et extérieur à l'arbre creux servant à la fois à l'entraînement de l'ensemble rotatif et à l'alimentation en gaz de fluidisation.

Dans un mode préféré de réalisation de la présente invention, les conduits radiaux sont des tubes inclinés vers le bas, de différentes longueurs et répartis à la périphérie du bac central à grille de fluidisation de telle façon que les particules solides soient uniformément distribués au-dessous de l'appareil. Ces tubes sont d'ailleurs avantageusement de même diamètre et même inclinaison.

Pour permettre la distribution de particules dans la zone située à l'aplomb du bac central, l'appareil comporte avantageusement au moins un conduit de distribution coudé, dont l'extrémité libre est dirigée vers ladite zone.

Les autres conduits de distribution sont avantageusement des tubes droits munis à leur extrémité d'un embout présentant une paroi verticale destinée à dévier vers le bas les particules s'écoulant dans les tubes.

En outre, afin de faciliter le mouvement ascendant d'un courant gazeux à contre-courant des particules, les conduits de distribution peuvent comporter des ailettes inclinées servant à aspirer vers le haut le courant gazeux, à la façon d'un ventilateur.

D'autres caractéristiques et avantages de la présente invention apparaîtront au cours de la description qui va suivre, faite en se référant aux dessins annexés.

Sur ces dessins :

La figure 1 est une vue en coupe d'un appareil de distribution selon l'invention installé au sommet d'une colonne ;

La figure 2 est une vue en coupe selon 2-2 de la figure 1 ;

La figure 3 est une vue à plus grande échelle du bac de l'appareil de la figure 1 ;

La figure 4 est une vue agrandie en coupe selon 4-4 de la figure 2 ;

La figure 5 est une vue latérale d'un embout ;

La figure 6 est une vue de dessus de l'embout de la figure 5.

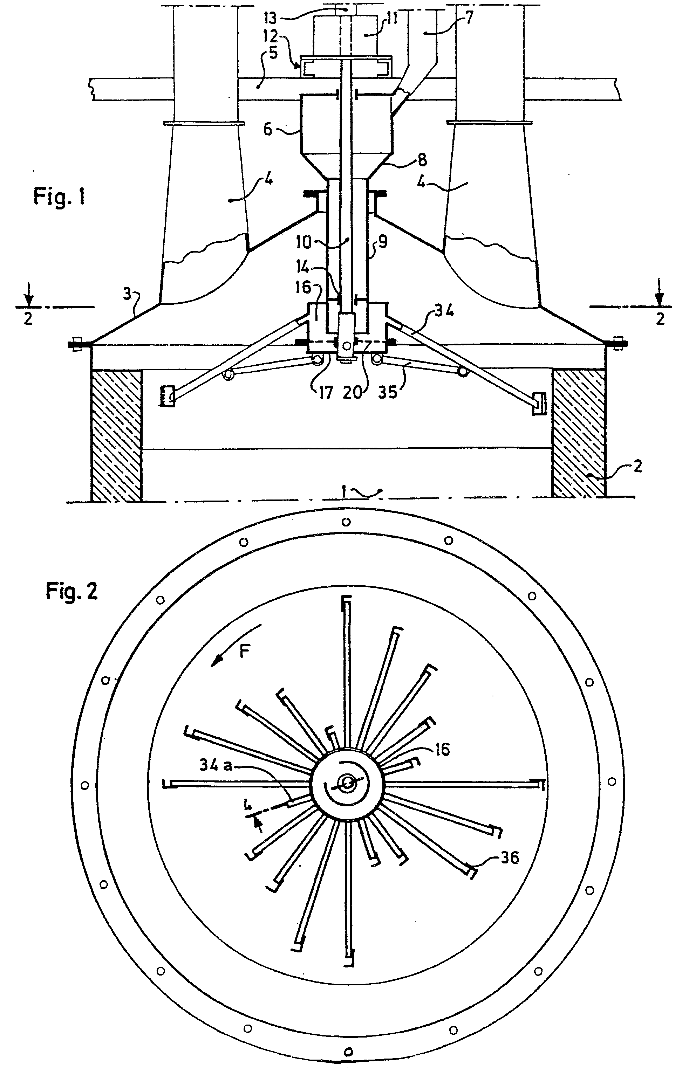

L'appareil représenté sur la figure 1 est disposé au sommet d'une colonne 1 comportant des parois 2 de briques réfractaires. Cette colonne est munie d'un couvercle conique 3 comportant des cheminées 4 d'évacuation du courant gazeux traversant la colonne.

L'appareil de distribution est supporté par un bâti 5. Il comprend un réservoir cylindrique 6 alimenté en particules solides par une goulotte 7. Le réservoir cylindrique 6 comporte à sa partie inférieure un entonnoir 8 prolongé par un tube cylindrique vertical 9 d'un diamètre plus faible que celui du réservoir 6.

L'ensemble constitué par le réservoir 6, l'entonnoir 8 et le tube 9, est traversé verticalement par un tube coaxial 10 d'un diamètre nettement plus faible que celui du tube 9. Le tube 10 est entraîné en rotation par un dispositif mécanique d'entraînement 11 fixé sur des traverses 12 reposant sur le bâti 5.

Le tube 10 est raccordé à un tube 13 coaxial par un raccord tournant, non représenté.

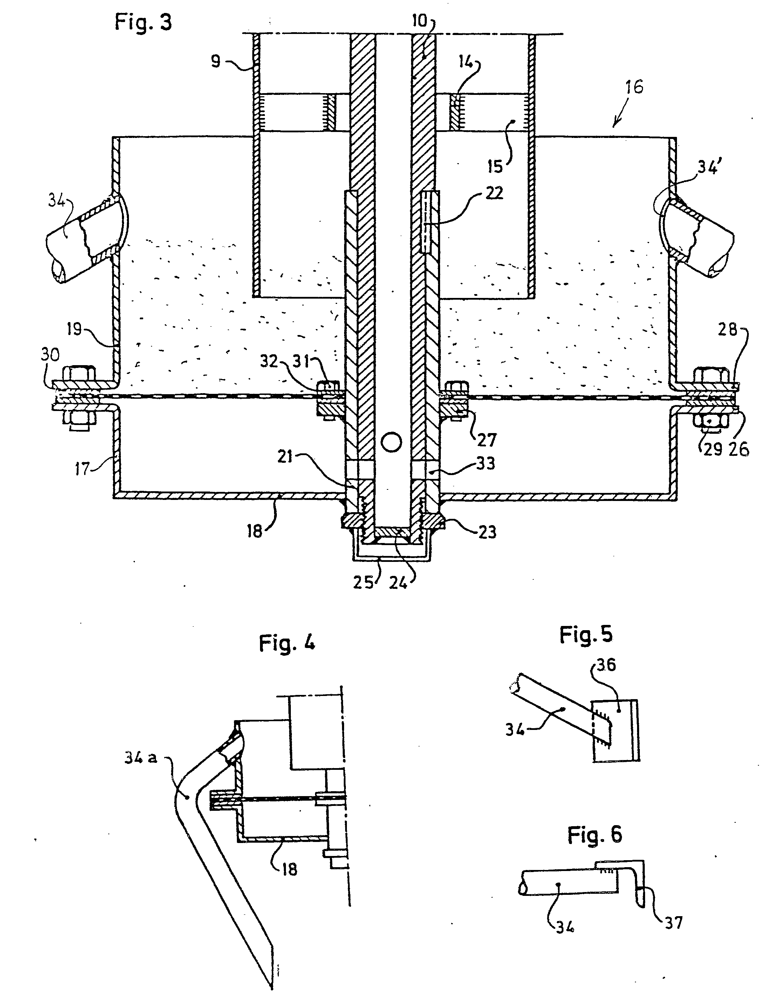

Le tube 10 est maintenu au centre du tube 9 par une bague 14 de centrage soudée au tube 9 par trois pattes 15 disposées à 120°, comme représenté par la figure 3.

A la partie inférieure du tube 10 est fixé un bac central cylindrique 16 dans lequel plonge l'extrémité inférieure du tube 9.

Comme représenté sur la figure 3, ce bac comporte deux parties : une partie cylindrique inférieure 17 formant boîte à vent, comportant un fond 18 et une partie cylindrique supérieure 19 séparées par une grille de fluidisation 20.

La partie inférieure 17 comprend en son centre un tube vertical 21 qui est emmanché sur l'extrémité inférieure du tube 10 et qui est rendu solidaire en rotation de ce dernier par une clavette 22. Un écrou 23 fixé sur une partie filetée inférieure du tube 10 assure le blocage axial du bac. L'extrémité inférieure du tube 10 est obturée par un bouchon 24 qui est protégé par un couvercle 25 soudé à l'écrou 23.

La partie inférieure 17 du bac 16 comporte à sa partie supérieure une collerette 26. Au même niveau, le tube 21 comporte une bague 27 soudée à sa périphérie. De manière correspondante, la partie supérieure 19 du bac comporte une collerette inférieure 28. La grille 20 est fixée entre les collerettes 26 et 28 à l'aide de huit boulons tels que 29 et de joints annulaires 30 et est fixée sur la bague 27 par des vis telles que 31 et des joints annulaires d'amiante 32.

Le tube 10 comporte sous la grille 20 quatre trous 33 percés à 90° et destinés à l'introduction d'un courant gazeux de fluidisation.

La partie supérieure 19 du bac 16 est raccordée, à un niveau supérieur à l'extrémité inférieure du tube 9, à vingt tubes de distribution 34 de même diamètre inclinés vers le bas d'un angle de 30°, au travers de vingt orifices 34' répartis à la périphérie de la partie supérieure 19.

Comme représenté sur la figure 2, les tubes de distribution 34 ont des longueurs différentes de façon à répartir les particules solides de la manière le plus uniforme possible à l'intérieur de la colonne 1.

Les tubes de distribution de grande longueur sont soutenus par des bras 35 boulonnés au milieu des tubes 34 et sur le fond 18 du bac 16.

Comme représenté sur la figure 4, l'un des tubes de distribution 34a est également incliné de 30° vers le bas, mais il présente un coude et son extrémité débouche sous le fond 18 du bac central et est dirigé vers l'axe de l'appareil.

Comme représenté sur les figures 5 et 6, les extrémités des autres tubes sont munies d'un embout 36. Cet embout est constitué d'une plaque soudée latéralement à chaque tube et dont l'extrémité est repliée à 90° dans le sens horaire (comme représenté sur la fig. 2) et forme une butée verticale déviant l'écoulement des particules à travers les tubes vers le bas.

Le fonctionnement de l'appareil est le suivant :

On introduit les particules solides par la goulotte 7 et de l'air de fluidisation par le tube 13. Il se forme dans le bac 16, au-dessus de la grille de fluidisation 20, un lit fluidisé dont le trop-plein s'écoule par les tubes 34. Le dispositif d'entraînement 11 entraîne en rotation dans le sens opposé du sens horaire (comme représenté par la flèche F sur la fig. 2) le tube 10, le bac 16 et les tubes 34 qui répartissent ainsi de façon uniforme et régulière les particules solides dans la colonne.

Le lit fluidisé permet non seulement un écoulement régulier des particules solides, mais constitue également une garde hydraulique qui empêche les gaz qui parcourent la colonne de s'échapper par l'appareil d'alimentation en particules solides.

A titre d'exemple, on utilise un appareil selon l'invention dans une colonne ayant un diamètre interne de 156 cm. Le tube 9 a un diamètre interne de 150 mm et le tube 10 a un diamètre interne de 20 mm. Le bac 16 a un diamètre interne de 292 mm. Les tubes de distribution 34 ont un diamètre interne de 20 mm.

L'un de ces tubes est un tube recourbé, comme représenté sur la figure 4, et présente son extrémité libre à 115 mm de l'axe de rotation.

Les autres tubes de distribution ont des extrémités situées respectivement dans le sens horaire à partir du tube recourbé aux distances suivantes de l'axe de rotation (en mm) : 683, 622, 503, 416, 200, 702, 600, 529, 383, 258, 721, 577, 554, 346, 305, 663, 643, 476 et 447.

On introduit du sable ayant la granulométrie suivante :

$$1\% < 100~\mu m$$
$$18\% < 160~\mu m$$
$$45\% < 200~\mu m$$
$$80\% < 250~\mu m$$
$$99\% < 400~\mu m$$

On règle la pression du gaz de fluidisation à environ 1 500 Pa (150 mm de colonne d'eau), correspondant à environ 500 Pa (50 mm de colonne d'eau) de perte de charge dans la grille, et à environ 1 000 Pa (100 mm de colonne d'eau) de perte de charge dans le lit fluidisé. La vitesse superficielle du gaz dans le lit est de l'ordre de 10 cm/s.

La hauteur du lit fluidisé est de 80 à 90 mm.

La vitesse de rotation des tubes de distribution est de 47 tours/min.

On obtient ainsi une distribution régulière et uniforme du sable au sommet de la colonne, avec un débit de sable qui peut varier de 1 à 4 tonnes/heure.

Un tel appareil peut fonctionner à température élevée sans qu'il se produise de colmatage du circuit d'amenée et de distribution des particules solides.

**Revendications**

1. Dispositif de distribution de particules solides du type comprenant un organe fixe d'alimentation (6, 7, 8, 9) délivrant un flux principal de particules solides et, disposés à sa partie inférieure, un bac (16) à grille de fluidisation (20) adaptée auxdites particules, bac dont une paroi circulaire (19) est munie d'orifices (34'), situés à un même niveau et uniformément répartis, formant déversoirs et délivrant des flux secondaires de particules solides, et un organe rotatif de distribution (34, 34a, 36, 37) recevant et dispersant lesdits flux secondaires, caractérisé en ce que le bac (16) et l'organe de distribution (34, 34a, 36, 37) sont rigidement liés en un seul et même ensemble rotatif.

2. Dispositif selon la revendication 1, caractérisé en ce que ledit ensemble rotatif est entraîné en rotation à l'aide d'un arbre axial d'entraînement (10) creux muni d'orifices (33) situés à l'intérieur du bac (16) et au-dessous de la grille de fluidisation (20), pour l'alimentation en gaz de fluidisation.

3. Dispositif selon la revendication 2, caractérisé en ce que ledit ensemble rotatif est disposé à la partie inférieure de l'arbre creux (10).

4. Dispositif selon l'une des revendications 1 à 3, caractérisé en ce que l'organe rotatif de distribution recevant lesdits flux secondaires de particules solides comporte des conduits (34) de distribution raccordés aux orifices déversoirs (34').

5. Dispositif selon l'une des revendications 1 à 4, caractérisé en ce que l'organe fixe d'alimentation (6, 7, 8, 9) comporte un conduit tubulaire (9) débouchant à un niveau inférieur à celui des orifices déversoirs (34').

6. Dispositif selon l'une des revendications 3 à 5, caractérisé en ce que le conduit tubulaire (9) est concentrique et extérieur à l'arbre creux (10).

7. Dispositif selon l'une des revendications 4 à 6, caractérisé en ce que les conduits (34) de distribution sont des tubes ou gouttières inclinés vers le bas et de différentes longueurs, agencés de telle façon que les particules solides soient uniformément distribuées au-dessous du dispositif.

8. Dispositif selon la revendication 7, caractérisé en ce que les tubes de distribution (34) sont de même diamètre et de même inclinaison.

9. Dispositif selon l'une des revendications 6 à 8, caractérisé en ce qu'il comporte des conduits de distribution (34) munis à leurs extrémités d'un embout (36) présentant une paroi verticale (37) destinée à dévier vers le bas les particules s'écoulant dans ces conduits.

10. Dispositif selon l'une des revendications 4 à 8, caractérisé en ce qu'il comporte au moins un conduit de distribution coudé (34a) dont l'extrémité libre est dirigée vers l'axe de rotation de l'organe de distribution rotatif au-dessous du bac (16).

11. Dispositif selon l'une des revendications 4 à 8, caractérisé en ce que les conduits de distribution (34) ont une inclinaison d'environ 30°.

**Claims**

1. A device for distributing solid particles of the type comprising a fixed feed member (6, 7, 8, 9) delivering a principal flow of solid particles and, arranged at its lower part, a vessel (16) having a fluidisation grid (20) adapted to said particles, a vessel of which a circular wall (19) is provided with orifices (34') situated at the same level and uniformly distributed, forming delivery means and delivering secondary flows of solid particles, and a rotatable distribution member (34, 34a, 36, 37) receiving and dispersing said secondary flows, characterised in that the vessel (16) and the distribution member (34, 34a, 36, 37) are rigidly connected as a single rotatable assembly.

2. Device according to claim 1, characterised in that said rotatable assembly is driven in rotation by means of a axial driving shaft (10) which is hollow provided with orifices (33) situated inside the vessel (16) and below the fluidisation grid (20) for feed of fluidisation gas.

3. Device according to claim 2, characterised in that said rotatable assembly is arranged at the lower part of the hollow shaft (10).

4. Device according to one of claims 1 to 3, characterised in that the rotatable distribution member receiving said secondary flows of solid particles comprises ducts (34) for distribution connected to the delivery orifices (34').

5. Device according to one of claims 1 to 4, characterised in that the fixed feed member (6, 7, 8, 9) comprises a tubular duct (9) opening at a level which is lower than that of the delivery orifices (34').

6. Device according to one of claims 3 to 5, characterised in that the tubular duct (9) is concentric with and exterior to the hollow shaft (10).

7. Device according to one of claims 4 to 6, characterised in that the distribution ducts (34) are tubes or channels inclined downwardly and of different lengths, arranged in such a manner that the solid particles are uniformly distributed below the device.

8. Device according to claim 7, characterised in that the distribution tubes (34) are of the same diameter and the same inclination.

9. Device according to one of claims 6 to 8, characterised in that it comprises distribution ducts (34) provided at their ends with an end piece (36) having a vertical wall (37) intended to divert downwardly the particles flowing in these ducts.

10. Device according to one of claims 4 to 8, characterised in that it comprises at least one bent distribution duct (34a) of which the free end is directed towards the axis of rotation of the rotatable distribution member below the vessel (16).

11. Device according to one of claims 4 to 8, characterised in that the distribution ducts (34) have an inclination of about 30°.

**Ansprüche**

1. Vorrichtung zum Verteilen von Feststoffpartikeln der Bauart mit einem festen Speiseorgan (6, 7, 8, 9), welches einen Hauptstrom aus Feststoffpartikeln liefert und, an dessen unterem Teil angebracht ist : eine Wanne (16) mit auf diese Partikel abgestimmtem Fluidisierungsgitter (20), wobei die Wanne eine kreisförmige Wandung (19) aufweist und mit Öffnungen (34') versehen ist, die auf ein und dem gleichen Niveau angeordnet und gleichförmig verteilt sind und Ausläufe unter Lieferung von Sekundärströmen auf Feststoffpartikeln bilden und einem Drehverteilerorgan (34, 34a, 36, 37), welches diese Sekundärströme aufnimmt und dispergiert, dadurch gekennzeichnet, daß die Wanne (16) und das Verteilerorgan (34, 34a, 36, 37) starr zu ein und derselben Dreheinheit verbunden sind.

2. Vorrichtung nach Anspruch 1, dadurch gekennzeichnet, daß die Dreheinheit in Drehung mit Hilfe einer axialen hohlen Antriebswelle (10) versetzt ist, welche mit Öffnungen (33) im Innern der Wanne (16) und unterhalb des Fluidisierungsgitters (20) zum Speisen mit Fluidisierungsgas versehen ist.

3. Vorrichtung nach Anspruch 2, dadurch gekennzeichnet, daß die Dreheinheit im unteren Teil der Hohlwelle (10) angeordnet ist.

4. Vorrichtung nach einem der Ansprüche 1 bis 3, dadurch gekennzeichnet, daß das diese Sekundärströme aus Feststoffpartikeln aufnehmende Drehverteilerorgan Verteilerleitungen (34) umfaßt, die mit den Auslauföffnungen (34') verbunden sind.

5. Vorrichtung nach einem der Ansprüche 1 bis 4, dadurch gekennzeichnet, daß das feste Speiseorgan (6, 7, 8, 9) eine röhrenförmige Leitung (9) umfaßt, die auf einem Niveau unterhalb desjenigen der Auslauföffnungen (34') mündet.

6. Vorrichtung nach einem der Ansprüche 3 bis 5, dadurch gekennzeichnet, daß die röhrenförmige Leitung (9) konzentrisch und außerhalb der Hohlwelle (10) angeordnet ist.

7. Vorrichtung nach einem der Ansprüche 4 bis 6, dadurch gekennzeichnet, daß die Verteilerleitungen (34) nach unten geneigte Röhren oder Rinnen unterschiedlicher Länge und derartiger Ausbildung sind, daß die Feststoffpartikel gleichförmig unterhalb der Vorrichtung verteilt werden.

8. Vorrichtung nach Anspruch 7, dadurch gekennzeichnet, daß die Verteilerröhren (34) von gleichem Durchmesser und gleicher Neigung sind.

9. Vorrichtung nach einem der Ansprüche 6 bis 8, gekennzeichnet durch Verteilerleitungen (34), die an ihren Enden mit einer Kappe (36) mit vertikaler Wandung (37) versehen sind, die dazu bestimmt ist, die in diese Leitung strömenden Partikel nach unten abzulenken.

10. Vorrichtung nach einem der Ansprüche 4 bis 8, dadurch gekennzeichnet, daß sie wenigstens eine gekrümmte Verteilerleitung (34a) umfaßt, deren freies Ende gegen die Drehachse des Drehverteilerorgans unterhalb der Wanne (16) gerichtet ist.

11. Vorrichtung nach einem der Ansprüche 4 bis 8, dadurch gekennzeichnet, daß die Verteilerleitungen (34) eine Neigung von etwa 30° haben.

**0 006 805**

Fig. 1

Fig. 2

**Fig. 3**

**Fig. 4**

**Fig. 5**

**Fig. 6**